# EUROPEAN PATENT APPLICATION

(11) **EP 1 328 074 A2**
(43) Date of publication of application: **16.07.2003**
(21) Application number: 03000433.7
(22) Date of filing: 10.01.2003
(51) Int. Cl.: H04B 7/185

(54) **Downlink switching mechanism for a satellite**

(30) Priority: 11.01.2002 US 44284
(71) Applicant: TRW INC., Redondo Beach, CA 90278 (US)
(72) Inventor: Lane, Daniel R., Santa Monica, CA 90405 (US); Franzen, Daniel R., Hermosa Beach, CA 90278 (US); DiCamillo, Nicholas F., Torrance, CA 90503 (US)
(74) Representative: Schmidt, Steffen J., Dipl.-Ing.

(57) **Abstract**

A satellite is provided that routes signals on 0 to n channels to any one of M downlink beams. The satellite may include n first-stage switches each corresponding to one of the 0 to n channels, M multiplexing devices each to combine n/2 channels into one output channel, M second-stage switches to receive outputs from said M multiplexing devices and M downlink antenna ports coupled to the M second-stage switches.

## Description

### BACKGROUND OF THE INVENTION

### 1. Field of the Invention

The present invention relates to communication satellites. More particularly, the present invention relates to a switching mechanism in the downlink side of a satellite's payload.

### 2. Discussion of the Related Art

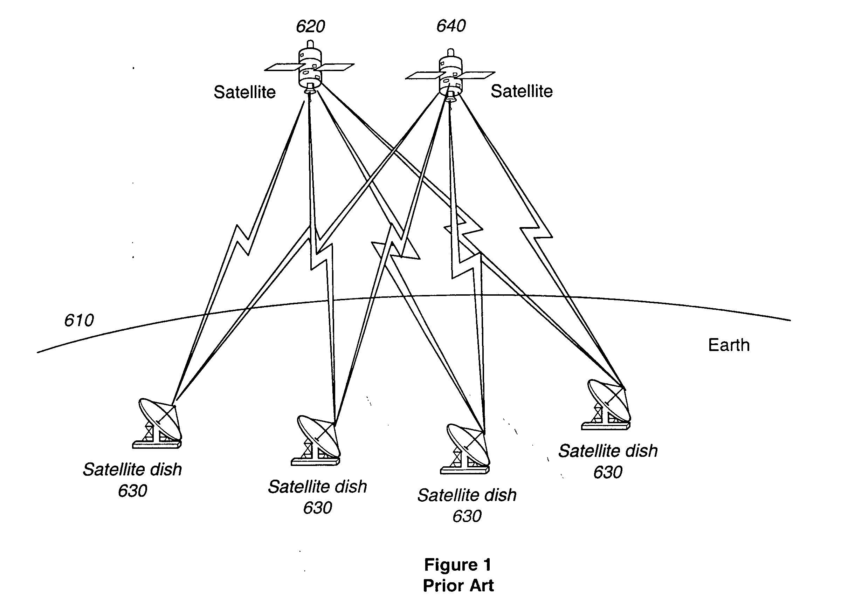

Conventionally, communication satellites were confined to telephone communications. However, all forms of communication are now being relayed by geo-synchronous satellites including, but not limited to, voice, data, video, television, and radio. Several major industries are heavily dependent upon reliable satellite communications service being continuously available. FIG. 1 is an illustration of a conventional satellite communications network in which two satellites provide redundancy for communications. Satellites 620 and 640 communicate with ground stations 630 located within a region of Earth 610 using a uniform distribution methodology. This uniform distribution methodology would allow for communications to an entire region of Earth 610, such as, but not limited to, North America. If one of satellite 620 or satellite 640 should ever fail, then the other satellite takes over its communications function. However, this redundancy is expensive to implement since two satellites must be used just in case one fails. Further, should demand increase in one location, it may not be possible to reconfigure the satellites in orbit to handle the additional load from the increased traffic seen in one area. In addition, building excess capacity in a satellite may not be possible at the time the satellite is being designed since that may be more than one year in advance of launch.

One mechanism utilized to overcome the foregoing problems of redundancy and capacity has been to utilize multiple feeds to form multiple spot beams to target specific locations on Earth 610. Conventionally, only a relatively small number of feeds could be placed within a single antenna due to the large feed hom size. However, as illustrated in U.S. Patent No. 6,211,835, U.S. Patent No. 6,215,452 and U.S. Patent No. 6,236,375, assigned to the assignee of this patent application and hereby incorporated by reference in their entirety, it is now possible to have a large number of spot beams in which each spot beam individually targets specific locations on Earth 610 using what is hereinafter referred to as hemispherical earth coverage antenna.

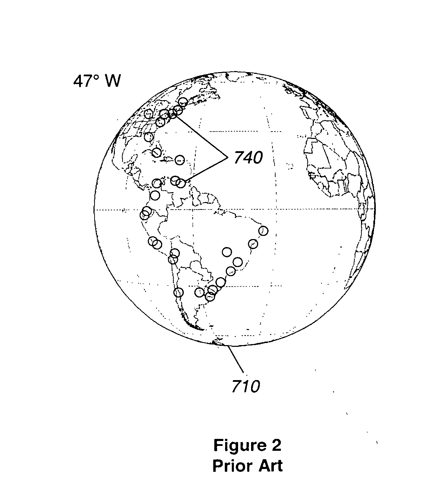

FIG. 2 is an example illustration of spot beams positioned over predefined Earth locations utilizing the previously mentioned hemispherical earth coverage antenna. A satellite 710 positions its spot beams 740 to cover South America and the east coast of the United States from its location at 47 degrees west longitude. More than one spot beam may be directed at any given location within the range of the satellite. Further, the positioning of the spot beams is dependent upon the physical alignment of the feeds in the antenna of the satellite and the longitude at which the satellite is positioned in geo-synchronous orbit as detailed in U.S. Patent Nos. 6,211,835; 6,215,452; and 6,236,375 incorporated herein by reference in their entireties. Once the feeds are set within a satellite they may not be changed individually to target another geographical location. However, unlike a uniform distribution method using this non-uniform methodology, the spot beams may be directed towards those areas where demand is highest and profitability maximized. Therefore, the positioning of feeds to generate spot beams is critical in determining the profitability and redundancy of a satellite communications network.

Spot beam broadband systems frequently divide the system's capacity into user groups. In a typical system, each user group consists of a number of coverage regions on the ground and the related satellite resources allocated to serving these regions. For hub-spoke networks, there is an uplink generated from one site, the gateway. Conventional hub-spoke systems generally require the gateway to be within a pre-determined coverage area. Similarly, present systems generally pre-define how the spectrum will be allocated among the user coverage areas. The problem with this approach is that demand for the system is highly uncertain, and it is likely that some cells will be overallocated resources while others will be underallocated resources. The result is a lower ability to sell capacity and sharply lower system revenues. There is a need for a more flexible approach to on-orbit, reallocate satellite uplink and downlink channel bandwidth among cells in a user group.

### BRIEF SUMMARY OF THE INVENTION

Embodiments of the present invention may provide a satellite that routes signals on 0 to n channels to any one of M downlink beams. The satellite may include n first-stage switches each corresponding to one of the 0 to n channels, M multiplexing devices each to combine n/2 channels into one output channel, M second-stage switches to receive outputs from said M multiplexing devices and M downlink antennas coupled to the M second-stage switches.

Other embodiments, objects, advantages and salient features of the invention will become apparent from the following detailed description taken in conjunction with the annexed drawings, which disclose preferred embodiments of the present invention.

### BRIEF DESCRIPTION OF THE DRAWINGS

The foregoing and a better understanding of the present invention will become apparent from the following detailed description of example embodiments and the claims when read in connection with the accompanying drawings, all forming a part of the disclosure of this invention. While the foregoing and following written and illustrated disclosure focuses on disclosing example embodiments of the invention, it should be clearly understood that the same is by way of illustration and example only and the invention is not limited thereto.

The following represents brief descriptions of the drawings in which like reference numerals represent like elements and wherein:

FIG. 1 illustrates a satellite communications network;

FIG. 2 illustrates spot beams positioned over Earth;

FIG. 3 is a block diagram illustrating a satellite payload according to an example embodiment of the present invention;

FIG. 4 illustrates a downlink switching mechanism according to an example embodiment of the present invention; and

FIG. 5 illustrates a switch according to an example embodiment of the present invention.

### DETAILED DESCRIPTION OF THE INVENTION

In the following detailed description, like reference numerals and characters may be used to designate identical, corresponding, or similar components in differing drawing figures. Furthermore, in the detailed description to follow, example values may be given, although the present invention is not limited thereto. Well-known power connections and other well-known elements have not been shown within the drawing figures for simplicity of illustration and discussion and so as not to obscure the invention.

Before describing details of embodiments of the present invention, a brief overview of an exemplary satellite payload architecture will be provided. The exemplary satellite payload architecture to be described is capable of receiving high frequency uplink beams at a plurality of receive antennas, converting the higher frequency to a lower frequency for switching of channels, converting the lower frequency signals to a higher frequency, and distributing the high power signals to one of the plurality of transmit antennas. As one example, the satellite may be a communications satellite for use with broadband communications such as for the Internet. The satellite may include numerous antenna structures such as disclosed in U.S. Patent 6,236,375, the subject matter of which is incorporated herein by reference. Each antenna may be an offset Cassegrain antenna having a subreflector, a main reflector and a separate feed array for a beam group. Other types of satellites and antenna structures are also within the scope of the present invention.

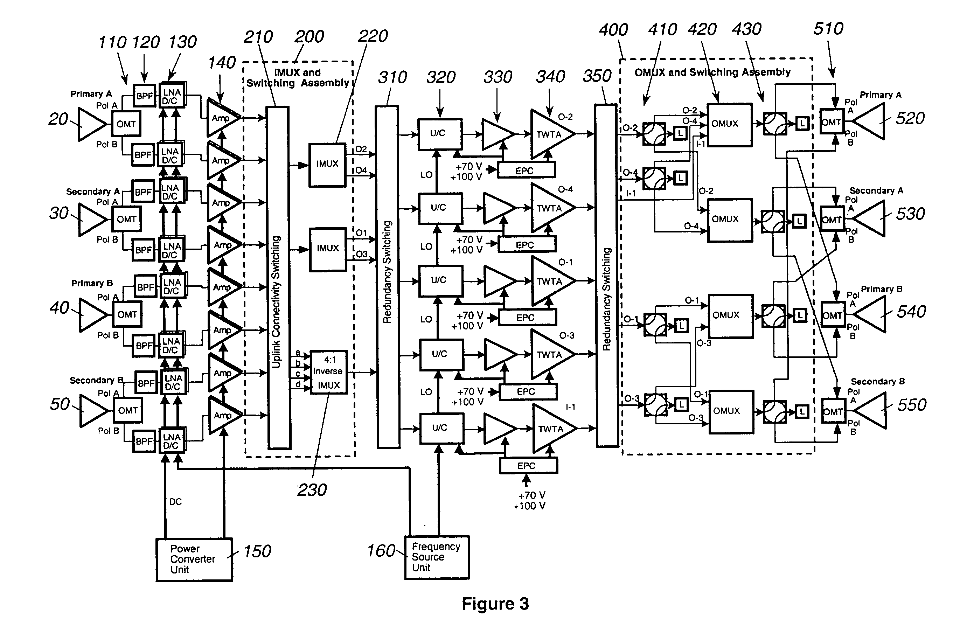

FIG. 3 is a block diagram illustrating electronics in a payload for one beam group of a multi-beam satellite according to an example embodiment of the present invention. Other embodiments and configurations are also within the scope of the present invention. The satellite payload may include similar electronics for each of the other beam groups. As one example, the satellite may include eight antenna structures for receiving and transmitting eight beam groups.

FIG. 3 shows a first dual-polarization antenna 20, a second dual-polarization antenna 30, a third dual-polarization antenna 40 and a fourth dual-polarization antenna 50 each to receive uplink beams from Earth in a well-known manner. Upon receipt of the uplink signals (such as broadband communication signals) at the antennas, the received signals pass through four ortho-mode transducers (OMT) 110 to eight band pass filters (BPF) 120. The filtered signals may pass to eight low noise amplifier downconverters (LNA D/C) 130 that convert the received and filtered signals from a higher frequency (such as approximately 30 GHz in the Ka-band) to a lower frequency (such as approximately 4 or 5 GHz in the C-band).

The lower frequency signals may then be amplified by eight C-band utility amplifiers 140 and proceed to an input multiplexer (IMUX) and switching assembly 200. The IMUX and switching assembly 200 may include an uplink connectivity switching network 210, which may be a power dividing switching network. Signals output from the uplink connectivity switching network 210 may be input to either one of the two outbound IMUXs 220 or to the 4:1 inverse IMUX 230. The IMUXes 220 output signals along forward channels O1, O2, O3 and O4 to a C-band redundancy switching network 310. The 4:1 inverse IMUX 230 outputs signals along return channel 11 to the C-band redundancy switching network 310.

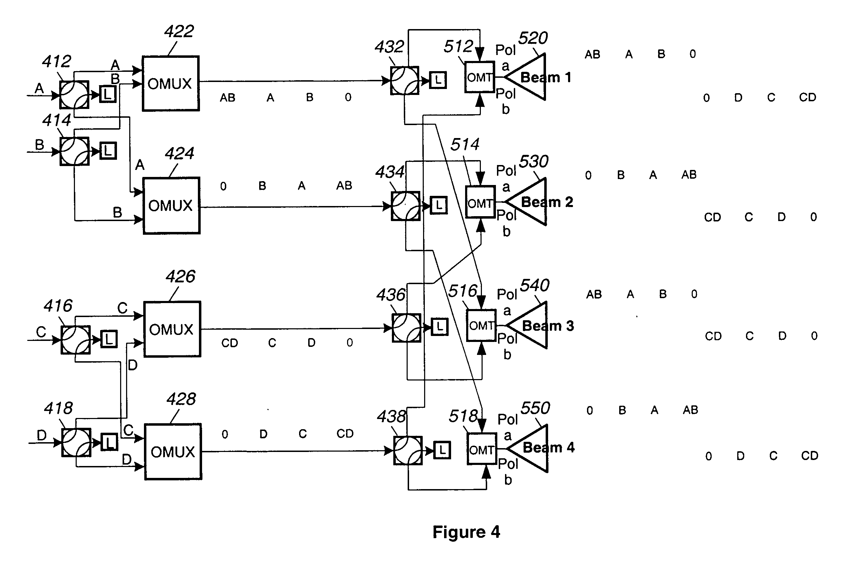

The C-band redundancy switching network 310 outputs signals to five up-converters (U/C) 320. The U/Cs 320 convert the lower frequency signals to higher K-band frequency signals (such as approximately 20 GHz) that will be used for transmission back to the Earth. The higher frequency K-band signals may then pass through five K-band linearizing channel amplifiers 330 and five high power amplifiers (HPAs) that include traveling wave tube amplifiers (TWTAs) 340. The five TWTAs 340 are high power amplifiers that supply the transmit RF power to achieve the downlink transmission. The five TWTAs 340 output four high power outbound signals O-1, O-2, O-3, O-4 to the users and one inbound signal I-1 to the gateway. The K-band redundancy switching network 350 provides the signals I-1, O-1, O-2, O-3 and O-4 to an OMUX and switching assembly 400 that will be described below with respect to FIG. 4.

The OMUX and switching assembly 400 may include mechanical switches 410 that couple the signals I-1, O- O-2, O-3 and O-4 to output multiplexers (OMUX) 420. The signals pass through the OMUXes 420 and are appropriately distributed to mechanical switches 430. The switches 430 distribute the signals to one of the downlink OMTs 510 and the corresponding downlink antenna such as a first dual-polarization downlink antenna 520, a second dual-polarization downlink antenna 530, a third dual-polarization downlink antenna 540 and a fourth dual-polarization downlink antenna 550.

A power converter unit 150 may also be provided to supply DC power to the LNA D/Cs 130 and the C-band utility amplifiers 140. Additionally, one centralized frequency source unit 160 supplies a local oscillation (LO) signal to the LNA D/Cs 130 and to the U/Cs 320. The power converter unit 150 and centralized frequency source unit 160 are shared across all beam groups of the satellite.

The IMUX and switching assembly 200 and the OMUX and switching assembly 400 operate to appropriately switch and filter uplinked signals from any one of the uplink antennas 20, 30, 40 and 50 to any one of the downlink antennas 520, 530, 540 and 550. While FIG. 3 shows one embodiment for the IMUX and switching assemblies 200 and one embodiment for the OMUX and switching assembly 400, other embodiments and configurations are also within the scope of the present invention. The IMUX and switching assembly 200 may operate at lower frequency (such as 4 GHz) than the OMUX and switching assembly 400. As will be discussed below, the OMUX and switching assembly 400 may be configured to minimize insertion losses between each of the TWTAs 340 and the downlink antennas 520, 530, 540 and 550.

In a multi-beam communications payload, there is a desire to flexibly and efficiently change the capacity delivered to downlink beams in a given beam group on-orbit, by re-allocating high power amplified (HPA) channels between downlink beams in the beam group. As one example, there may be a need to route between 1 and 4 HPA channels among 4 dual-polarization downlink beams, either by routing all 4 HPA channels to any one of the 4 downlink beams, or by routing one or more HPA chains to several of the 4 downlink beams. The electronics of FIG. 4 described below may enable the flexible allocation of capacity (4 channels) among 4 dual-polarization downlink beams, while maintaining low post-HPA insertion loss, and maximizing EIRP performance. While this embodiment will be described with respect to four channels and four downlink beams, other numbers of channels and downlink beams (from antenna ports) are also within the scope of the present invention.

Embodiments of the present invention may deliver capacity flexibility by utilizing a specific combination of post-HPA switches, output multiplexers (OMUXs), and post-multiplexer switches. The combination described below may deliver capacity re-allocation and surge capability among 4 HPA channels and 4 downlink beams. Any one of 0 to 4 HPA channels may be routed to any of the 4 downlink beams (or antenna ports) with minimum blockages of which HPA chains are routed to a particular beam. This may involve routing each of the 4 HPA outputs to one of the four 1:2 post-HPA switches. The outputs of the post-HPA switches may be coupled to four 2:1 output multiplexers that combine 2 channels into one output channel. The output of each multiplexer may be coupled to a 1:2 switch that couples the multiplexed signal to one of two downlink beams.

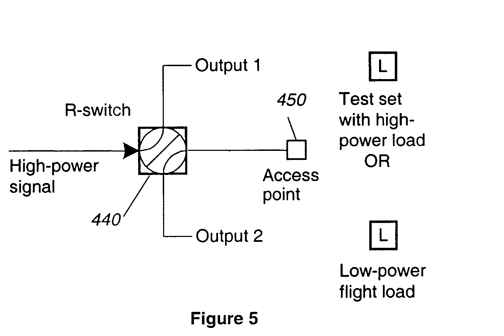

Additionally, as will be described with respect to FIG. 5, a 1:3 switch (R-switch) may also be used rather than the 1:2 switch (C-switch). The third output of the 1:3 switch may be used as a test port and may be routed to a test panel or to a test set. This may allow access to test the high power signal without breaking the repeater to antenna interface. Since each HPA is routed through a 1:2 switch and then to a 1:2 switch, each HPA may be routed to one of 4 downlink beams.

Embodiments of the present invention are not limited to 4 HPA channels and 4 downlink beams. Many different combinations of channels and beams are also within the scope of the present invention. For example, 8 HPA channels and 4 downlink beams (or 4 downlink antenna ports) may be used. In this example, eight 1:2 post-HPA switches, four 4:1 OMUXs, and four 1:2 switches may be configured to enable capacity flexibility among 8 HPA chains and 4 dual-polarization downlink beams. As another example, when 4 HPA channels and 8 downlink beams are used, then four 1:4 switches, eight 2:1 OMUXs, and eight 1:2 switches may be configured to enable capacity flexibility among 4 HPA chains and 8 dual-polarization downlink beams.

FIG. 4 shows the OMUX and switching assembly 400 (shown in FIG. 3) according to one example embodiment of the present invention. In this example embodiment, the I-1 channel has been omitted for clarity. Other embodiments and configurations are also within the scope of the present invention. As shown in FIG. 4, the OMUX and switching assembly 400 may receive a first HPA signal A, a second HPA signal B, a third HPA signal C and a fourth HPA signal D. Each of the signals A-D may correspond to the signals O-2, O4, O-1 and O-3 output from the TWTAs 340 (FIG. 3) or output from the redundancy switching network 350. The OMUX and switching assembly 400 distributes the respective signals to the desired output antenna (or antenna port) preferably with a minimum number of intermediate hardware in order to minimize insertion losses.

The OMUX and switching assembly 400 may include a plurality of mechanical switches 412, 414, 416 and 418, a plurality of OMUXes 422, 424, 426 and 428 and a plurality of switches 432, 434, 436 and 438. A state of each of these components may be appropriately controlled by a control unit to ensure proper distribution of the signals. Each of the switches may be a C-type of mechanical switch, for example. Other types of switches are also within the scope of the present invention. The OMUXes may contain filter mechanisms. Because each of the switches and OMUXes contain insertion losses, it is desirable to minimize the number of those elements since insertion losses lead to power reduction in the transmitted downlink beams.

As shown in FIG. 4, the signal A may pass through the switch 412 to either the OMUX 422 or the OMUX 424 based on a state of the switch 412. Similarly, the signal B may pass through the switch 414 to either the OMUX 422 or the OMUX 424 based on a state of the switch 414. The signal C may pass through the switch 416 to either the OMUX 426 or the OMUX 428 based on a state of the switch 416. Likewise, the signal D may pass through the switch 418 to either the OMUX 426 or the OMUX 428 based on a state of the switch 418.

The OMUX 422 in combination with the switches 412 and 414 allow four different signals or combinations of signals to be output from the OMUX 422. As shown, these possibilities include the following: AB, A, B and 0, where "0" represents no signal. Likewise, the OMUX 424 in combination with the switches 412 and 414 allow four different signals or combinations of signals to be output from the OMUX 424. As shown, these possibilities include the following: 0, B, A, and AB. Still further, the OMUX 426 in combination with the switches 416 and 418 allow four different signals or combinations of signals to be output from the OMUX 426. As shown, these possibilities include the following: CD, C, D and 0. Finally, the OMUX 428 in combination with the switches 416 and 418 may output four different signals or combinations of signals from the OMUX 428. As shown, these possibilities include the following: 0, D, C and CD.

The signals output from the OMUX 422 may pass through the switch 432 and be distributed to either the OMT 512 or the OMT 516 based on the state of the switch 432. The signals output from the OMUX 424 may pass through the switch 434 and be distributed to either the OMT 514 or the OMT 518 based on the state of the switch 434. The signals output from the OMUX 426 may pass through the switch 436 and be distributed to either the OMT 514 or the OMT 516 based on the state of the switch 436. Finally, the signals output from the OMUX 428 may pass through the switch 438 and be distributed to either the OMT 512 or the OMT 518 based on the state of the switch 438.

The OMT 512 outputs the received signals to the antenna 520 (or antenna port) that transmits the downlink beam 1, the OMT 514 outputs the received signals to the antenna 530 (or antenna port) that transmits the downlink beam 2, the OMT 516 outputs the received signals to the antenna 540 (or antenna port) that transmits the downlink beam 3 and the OMT 518 outputs received signals to the antenna 550 (or antenna port) that transmits the downlink beam 4. As may be seen to the right of each of the antennas 520, 530, 540 and 550, the HPA signals A, B, C and D may be distributed to any one of the antennas 520, 530, 540 and 550 alone or in combination.

Figure 5 illustrates a switch 440 that may be substituted for any one of the switches 432, 434, 436 or 438. The switch 440 may be an R switch having three outputs. The switch 440 may receive the high power signal from one of the OMUXes 422, 424, 426 or 428 and may distribute the received signal to any one of three outputs. That is, if the switch 440 is substituted for the switch 438 in Figure 4, then the signal output of the switch 440 may pass to the OMT 512, the OMT 518 or to an access port 450 based on a state of the switch 440. The output access port 450 may be to an outside of the spacecraft so as to allow appropriate power testing on an outside of the spacecraft.

Any reference in the above description to "one embodiment", "an embodiment", "example embodiment", etc., means that a particular feature, structure, or characteristic described in connection with the embodiment is included in at least one embodiment of the invention. The appearances of such phrases in various places in the specification are not necessarily all referring to the same embodiment. Further, when a particular feature, structure, or characteristic is described in connection with any embodiment, it is submitted that it is within the knowledge of one skilled in the art to effect such feature, structure, or characteristic in connection with other ones of the embodiments.

Although the present invention has been described with reference to a number of illustrative embodiments thereof, it should be understood that numerous other modifications and embodiments can be devised by those skilled in the art that will fall within the spirit and scope of the principles of this invention. More particularly, reasonable variations and modifications are possible in the component parts and/or arrangements of the subject combination arrangement within the scope of the foregoing disclosure, the drawings and the appended claims without departing from the spirit of the invention. In addition to variations and modifications in the component parts and/or arrangements, alternative uses will also be apparent to those skilled in the art.

## Claims

1. A satellite mechanism for routing 0 to n signals to any one of M downlink beams, said satellite mechanism comprising:
a plurality of first switching devices each to route an input signal to at least one of two outputs;
a plurality of multiplexing devices to receive inputs from said plurality of first switching devices and to provide a plurality of output signals; and
a plurality of second switching devices each corresponding to one of said plurality of multiplexing devices and provided to receive said plurality of output signals, each of said plurality of second switching devices to route a received signal to one of M antenna ports.

2. The satellite mechanism of claim 1, wherein said plurality of first switching devices comprise n first-stage switches each corresponding to one of 0 to n channels, said plurality of multiplexing devices comprises M multiplexing devices each to combine n/2 channels into one output channel, said plurality of second switching devices comprises M second-stage switches to receive outputs from said M multiplexing devices.

3. The satellite mechanism of claim 1, wherein said plurality of first switching devices comprises an M/2 output mechanical switch or set of switches.

4. The satellite mechanism of claim 1, wherein said plurality of second switching devices comprise two-output mechanical switches.

5. The satellite mechanism of claim 1, wherein one of said plurality of second switching devices comprises a three-output switch to route a received signal to one of a test port and a desired antenna port.

6. The satellite mechanism of claim 1, further comprising:
a receive antenna or plurality of receive antennas to receive a beam or plurality of beams each on a channel or set of channels; and
means for routing each of said plurality of beams from corresponding ones of said receive antenna or receive antennas to said plurality of first switching devices.

7. The satellite mechanism of claim 1, wherein said signals relate to broadband communications.

8. The satellite mechanism of claim 1, further comprising a control unit to control operation of at least said plurality of first switching devices, said plurality of multiplexing devices and said plurality of second switching devices.

9. A method of routing n signals to any one of M downlink antenna ports on a satellite, said method comprising:
receiving said n signals each corresponding to a different channel; and
directing each of said signals to one of said M downlink antenna ports using n first-stage switches, M multiplexing devices and M second-stage switches.

10. The method of claim 9, wherein directing each of said signals comprises passing said signals through said n first-stage switches, using M multiplexing devices each to combine n/2 channels into one output channel, receiving outputs from said M multiplexing devices at said M second-stage switches, and passing said signals through said M second-stage switches.
